(19) Europäisches Patentamt
European Patent Office
Office européen des brevets

(11) **EP 4 748 590 A1**

(12) **EUROPEAN PATENT APPLICATION**

(43) Date of publication:
27.05.2026 Bulletin 2026/22

(21) Application number: 25205402.8

(22) Date of filing: 29.09.2025

(51) International Patent Classification (IPC):
*B60C 11/03* (2006.01)     *B60C 11/12* (2006.01)

(52) Cooperative Patent Classification (CPC):
**B60C 11/0304; B60C 11/0302; B60C 11/0306;
B60C 11/0332; B60C 11/12;** B60C 2011/0372

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 21.11.2024 JP 2024203440

(71) Applicant: SUMITOMO RUBBER INDUSTRIES,
LTD.
Kobe-shi, Hyogo 651-0072 (JP)

(72) Inventors:
• SAWAKAMI, ISAO
Hyogo, 651-0072 (JP)
• KURATOMI, YOTA
Hyogo, 651-0072 (JP)

(74) Representative: **Forresters IP LLP
Skygarden
Erika-Mann-Straße 11
80636 München (DE)**

(54) **TIRE**

(57) A tire having a tread portion including circumferential grooves and land regions each provided with groove-shaped portions (31) each having a first end on a first side and a second end on a second side in a tire circumferential direction. In each pair of the groove-shaped portions circumferentially adjacent to each other, the first end of one groove-shaped portion and the second end of the other groove-shaped portion of the pair are formed at the same circumferential position in the same land region or different land regions. In at least one land region in a 70% loaded state, an absolute value of a difference between one of angles θa of both circumferential edges of the at least one land region and an angle θb of one of the groove-shaped portions formed therein with respect to the tire axial direction is 5 degrees or more.

FIG.2

EP 4 748 590 A1

**FIG.3**

**Description**

RELATED APPLICATIONS

This application claims the benefit of foreign priority to Japanese Patent Application No. JP2024-203440, filed November 21, 2024, which is incorporated by reference in its entirety.

FIELD OF THE INVENTION

The present invention relates to a tire.

BACKGROUND OF THE INVENITON

Japanese Unexamined Patent Application Publication No. 2023-146910 discloses a tire having a tread portion including a plurality of circumferential grooves extending continuously in a tire circumferential direction and a plurality of land regions demarcated by the circumferential grooves. Each of the land regions is provided with a plurality of axial groove-shaped elements extending obliquely with respect to a tire axial direction and the tire circumferential direction.
Each of the axial groove-shaped elements has a first end on a first side in the tire circumferential direction and a second end on a second side in the tire circumferential direction. The axial groove-shaped elements are arranged in a first arrangement over the entire circumference of the tire. In this first arrangement, in each pair of the axial groove-shaped elements adjacent to each other in the tire circumferential direction, the first end of one axial groove-shaped element of the pair is formed at the same position in the tire circumferential direction as the second end of the other axial groove-shaped element of the pair.

SUMMARY OF THE INVENTION

In the tire described above, pitch noise is reduced by having the axial groove-shaped elements continuously contact the ground while the tire is running, but there is still room for further improvement.
The present invention was made in view of the above, and a primary object thereof is to provide a tire capable of reducing the pitch noise.
The present invention is a tire including a tread portion, wherein

the tread portion includes a plurality of circumferential grooves each extending continuously in a tire circumferential direction and a plurality of land regions demarcated by the circumferential grooves,
each of the land regions is provided with a plurality of groove-shaped portions inclined with respect to a tire axial direction,
each of the groove-shaped portions has a first end on a first side in the tire circumferential direction and a second end on a second side opposite to the first side in the tire circumferential direction,
the groove-shaped portions are arranged over the entire circumference of the tire in the tire circumferential direction according to a predetermined arrangement rule,
in the arrangement rule, in each pair of all pairs of the groove-shaped portions adjacent to each other in the tire circumferential direction among the groove-shaped portions, the first end of one groove-shaped portion of the pair and the second end of the other groove-shaped portion of the pair are formed at the same position in the tire circumferential direction,
in each pair, the groove-shaped portions constituting the pair are formed in the same land region or in different land regions,
ground contact edges on both sides in the tire circumferential direction of at least one of the land regions have angles θa with respect to the tire axial direction in a 70% loaded state in which the tire is mounted on a standard rim, inflated to a standard inner pressure, and in contact with a flat surface with zero camber angle by being loaded with 70% of a standard tire load, and
an absolute value of a difference between one of the angles θa and an angle θb of the groove-shaped portions formed in the at least one of the land regions with respect to the tire axial direction is 5 degrees or more.

It is possible that the tire of the present invention reduces the pitch noise by adopting the above-described configuration.

BRIEF DESCRIPTION OF THE DRAWINGS

FIG. 1 is a development view showing an example of a tread portion of a tire.
FIG. 2 is an enlarged partial view of a center land region, an inner middle land region, and an outer middle land region of FIG. 1.
FIG. 3 is a diagram showing an example of a footprint of the tread portion in a 70% loaded state.
FIG. 4 is a diagram showing a maximum ground contact length (L) and a ground contacting length (Lm) in the footprint of the tread portion in the 70% loaded state.
FIG. 5 is an enlarged perspective view showing an example of protruding portions provided in an inner shoulder circumferential groove.
FIG. 6 is a cross-sectional view taken along A-A line of FIG. 2.

DETAILED DESCRIPTION OF THE INVENTION

An embodiment of the present invention will now be described in conjunction with accompanying drawings. It should be understood that the drawings may contain exaggerated representations and representations that differ from the dimensional ratios of the actual structure in order to aid in understanding the present invention. Further, in case of multiple embodiments, identical or common elements are assigned with the same reference signs throughout the embodiments, and redundant explanations are omitted. Furthermore, the specific configurations shown in the embodiments and the drawings are intended to aid in understanding the contents of the present invention, and the present invention is not limited to the specific configurations illustrated.

[Tire]

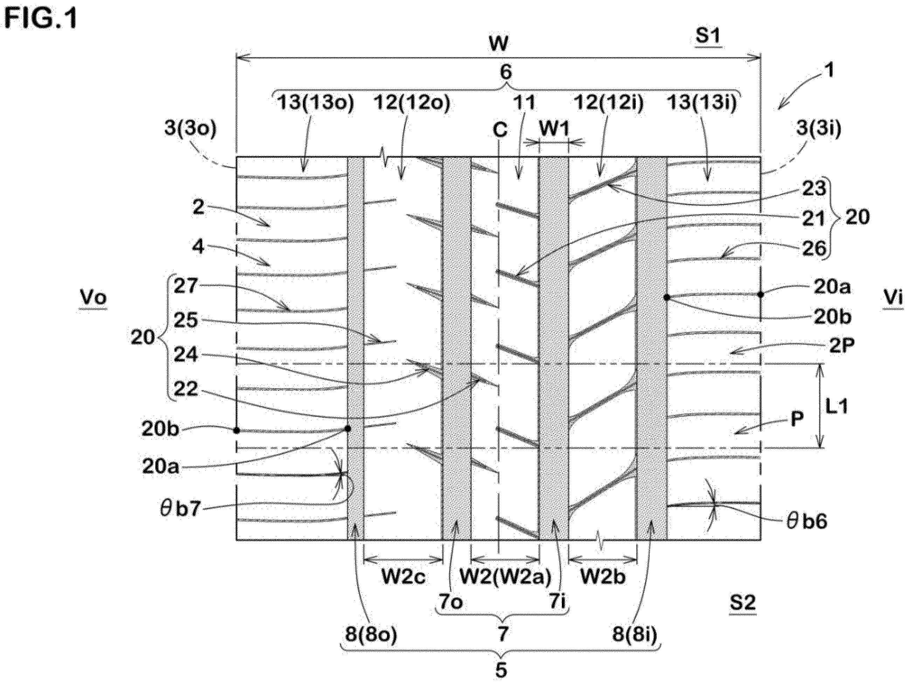

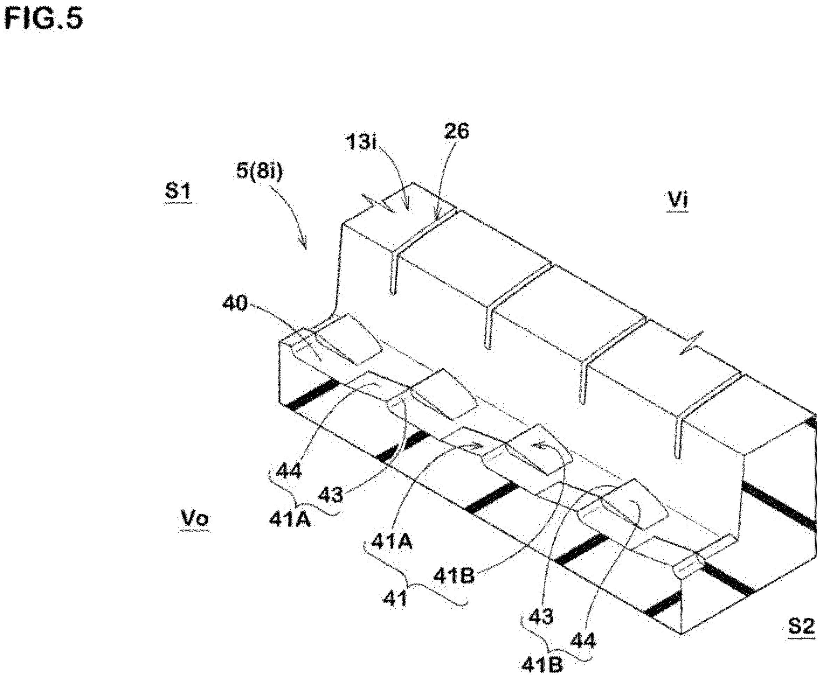

FIG. 1 is a development view showing an example of a tread portion 2 of a tire 1. In FIG. 1, protruding portions 41 (shown in FIG. 5) which will be described later are omitted.
In the present embodiment, the tire 1 is exemplified as a pneumatic tire, for example. The tire 1 may also be a non-pneumatic tire (airless tire). Further, a passenger car tire is suitable as the tire of the present embodiment. It should be noted that the tire 1 may also be a motorcycle tire or a heavy-duty tire.

[Tread Portion]

The tire 1 in the present embodiment has the tread portion 2. The tread portion 2 in the present embodiment has a tread portion position for mounting the tire on a vehicle is specified regarding inner and outer sides of the tread portion with respect to the vehicle. However, it is not limited to this manner, and the tread portion position may not be specified, for example. It should be noted that the tread portion position for mounting the tire on a vehicle is indicated by letters or marks (not shown) on a sidewall portion (not shown) of the tire 1, for example. In FUG. 1, the right side corresponds to a vehicle inside (Vi) of the vehicle, and the left side corresponds to a vehicle outside (Vo) of the vehicle.
The tread portion 2 in the present embodiment includes a pair of tread edges 3 and a ground contacting surface 4 therebetween. The ground contacting surface 4 is the part intended to come into contact with the ground (road surface) when the tire is running, and is formed of a tread rubber. When the tread portion position for mounting the tire on a vehicle is specified, such as the tread portion 2 in the present embodiment, the tread edges 3 include an inner tread edge (3i) provided on the vehicle inside (Vi) and an outer tread edge (3o) provided on the vehicle outside (Vo).
When the tire 1 is a pneumatic tire, the pair of the tread edges 3 (in the present example, the inner tread edge (3i) and the outer tread edge (3o)) are specified as the axially outermost ground contact positions of the tire in a 70% loaded state. Here, the "70% loaded state" is a state in which the tire 1 in a standard state is in contact with a flat surface with zero camber angle by being loaded with 70% of a standard tire load.
The "standard state" refers to a state in which the tire 1 is mounted on a standard rim (not shown), inflated to a standard inner pressure, and loaded with no tire load. In the present specification, unless otherwise noted, the dimensions of various parts of the tire are shown as values measured in the standard state. It should be noted that normal dimensional errors (tolerances) that are unavoidable during manufacturing shall be allowed for dimensions, and the like.
The "standard rim" refers to a wheel rim specified for the concerned tire by a standard included in a standardization system on which the tire is based. Therefore, the standard rim is "normal wheel rim" in JATMA, "Design Rim" in TRA, and a "Measuring Rim" in ETRTO, for example.
The "standard inner pressure" refers to air pressure specified for the concerned tire by a standard included in a standardization system on which the tire is based. Thereby, the standard inner pressure is the maximum air pressure in JATMA, the maximum value listed in the "TIRE LOAD LIMITS AT VARIOUS COLD INFLATION PRESSURES" table in TRA, and "INFLATION PRESSURE" in ETRTO, for example.

The "standard tire load" refers to a tire load specified for the concerned tire by a standard included in a standardization system on which the tire is based. Therefore, the standard tire load is the "maximum load capacity" in JATMA, maximum value listed in "TIRE LOAD LIMITS AT VARIOUS COLD INFLATION PRESSURES" table in TRA, and "LOAD CAPACITY" in ETRTO, for example.

The tread portion 2 of the present embodiment has a tread pattern (2P) in which a plurality of one-pitch regions (P) each forming a pattern constituent unit is arranged in the tire circumferential direction. If the one-pitch regions (P) have a common pattern, ones having the same length in the tire circumferential direction may be arranged or ones having different lengths in the tire circumferential direction may be arranged randomly, for example. Each of the one-pitch regions (P) in the present embodiment has a length (L1) in the tire circumferential direction in the range from 19 to 36 mm, for example.

It is preferred that the tread pattern (2P) has a plurality of types of the one-pitch regions (P) having different lengths (L1) in the tire circumferential direction arranged in the tire circumferential direction. Therefore, the tread pattern (2P) has natural frequencies different between the one-pitch regions (P), thereby, noise performance is improved. In order to effectively enhance such an effect, it is preferred that the number of types of the one-pitch regions (P) is in the range from 2 to 10.

The tread portion 2 (tread pattern (2P)) in the present embodiment includes a plurality of circumferential grooves 5 extending continuously in the tire circumferential direction and a plurality of land regions 6 demarcated by the circumferential grooves 5.

[Circumferential Groove]

The circumferential grooves 5 extend continuously in the tire circumferential direction in the ground contacting surface 4 between the tread edges 3 (between the inner tread edge (3i) and the outer tread edge (3o)). The circumferential grooves 5 configured as such allow water between the tread portion 2 and the road surface (not shown) to drain off during running on a wet road surface, therefore, wet performance is improved.

Each of the circumferential grooves 5 in the present embodiment extends linearly along the tire circumferential direction, however, the present invention is not limited to such a manner. Each of the circumferential grooves 5 may extend in a wavy or zigzag manner, for example.

A groove width (W1) and a groove depth (not shown) of each of the circumferential grooves 5 can be appropriately set. The groove width W1 is set to be in the range from 2.0% to 8.0% of a maximum ground contacting width (W) in the tire axial direction of a ground contact surface in the 70% loaded state, for example. The groove depth is set to be in the range from 4.0 to 10.0 mm, for example. It should be noted that the maximum ground contacting width (W) is specified as a distance in the tire axial direction between the tread edges 3 (between the inner tread edge (3i) and the outer tread edge (3o) in the present embodiment). The groove width is specified as a distance between two groove edges adjacent to each other in a direction perpendicular to a groove centerline.

The circumferential grooves 5 include at least one center circumferential groove 7 arranged on a tire equator (C) side. The circumferential grooves 5 in the present embodiment include a pair of the center circumferential grooves 7 and a pair of shoulder circumferential grooves 8. The center circumferential grooves 7 and the shoulder circumferential grooves 8 allow water between the tread portion and the road surface to be discharged over a wide area in the tire axial direction, thereby, the wet performance is improved. It should be noted that the circumferential grooves 5 are not limited to an embodiment including a pair of the center circumferential grooves 7 and a pair of the shoulder circumferential grooves 8, but the circumferential grooves 5 may be composed of one center circumferential groove 7 and a pair of the shoulder circumferential grooves 8, for example.

The center circumferential grooves 7 are disposed on both sides, one on each side, of the tire equator (C) in the tire axial direction. When the tread portion position for mounting the tire on a vehicle is specified regarding inner and outer sides of the tread portion with respect to the vehicle as in the tread portion 2 of the present embodiment, the pair of the center circumferential grooves 7 include an inner center circumferential groove (7i) arranged on the vehicle inside (Vi) and an outer center circumferential groove (7o) arranged on the vehicle outside (Vo). From the point of view of improving the above-mentioned wet performance, each of the groove center lines (not shown) of the center circumferential grooves 7 may be arranged at a position spaced axially outward from the tire equator (C) on a respective axial side thereof by a distance in the range from 6% to 15% of the maximum ground contacting width (W).

The shoulder circumferential grooves 8 are each disposed between a respective one of the center circumferential grooves 7 and a respective one of the tread edges 3. When the tread portion position for mounting the tire on a vehicle is specified regarding inner and outer sides of the tread portion with respect to the vehicle as in the tread portion 2 of the present embodiment, the shoulder circumferential grooves 8 include an inner shoulder circumferential groove (8i) arranged on the vehicle inside (Vi) and an outer shoulder circumferential groove (8o) arranged on the vehicle outside (Vo). In the present embodiment, the inner shoulder circumferential groove (8i) is arranged between the inner center circumferential groove (7i) and the inner tread edge (3i) and the outer shoulder circumferential groove (8o) is arranged between the outer center circumferential groove (7o) and the outer tread edge (3o). From the point of view of improving the above-mentioned wet performance, it is preferred that the groove center line (not shown) of each of the shoulder circumferential grooves 8 is located at a position spaced axially outward from the tire equator (C) on a respective axial side thereof by a distance of 25% to 35% of the maximum ground contacting width (W). In addition, the groove width (W1) of the outer shoulder circumferential groove (8o) may be set smaller than the groove width (W1) of the inner shoulder circumferential groove (8i). As a result, tread rigidity is increased on the outer side of the vehicle where ground contact pressure is relatively high during cornering, thereby, steering stability performance is improved.

[Land Region]

The land regions 6 are demarcated by the circumferential grooves 5. The land regions 6 in the present embodiment include a center land region 11, a pair of middle land regions 12, and a pair of shoulder land regions 13. It should be noted that the land regions 6 are not limited to such a configuration, and may be configured to include a pair of the center land regions 11 and a pair of the shoulder land regions 13 depending on the running performance and the like required of the tire 1, for example.

The center land region 11 is demarcated between the pair of the center circumferential grooves 7 (the inner center circumferential groove (7i) and the outer center circumferential groove (7o)). As a result, the center land region 11 is disposed on the tire equator (C).

The middle land regions 12 are demarcated between the center circumferential grooves 7 and the shoulder circumferential grooves 8. When the tread portion position for mounting the tire on a vehicle is specified regarding inner and outer sides of the tread portion with respect to the vehicle as in the tread portion 2 of the present embodiment, the middle land regions 12 include an inner middle land region (12i) arranged on the vehicle inside (Vi) and an outer middle land region (12o) arranged on the vehicle outside (Vo).

The inner middle land region (12i) is demarcated between the inner center circumferential groove (7i) and the inner shoulder circumferential groove (8i). The outer middle land region (12o) is demarcated between the outer center circumferential groove (7o) and the outer shoulder circumferential groove (8o).

Each of the shoulder land regions 13 is demarcated on a respective axially outer side of a respective one of the shoulder circumferential grooves 8. When the tread portion position for mounting the tire on a vehicle is specified regarding inner and outer sides of the tread portion with respect to the vehicle as in the tread portion 2 of the present embodiment, the shoulder land regions 13 include an inner shoulder land region (13i) disposed on the vehicle inside (Vi) and an outer shoulder land region (13o) disposed on the vehicle outside (Vo).

The inner shoulder land region (13i) is demarcated on the axially outer side (on the vehicle inside (Vi)) of the inner shoulder circumferential groove (8i) and includes the inner tread edge (3i). The outer shoulder land region (13o) is demarcated on the axially outer side (on the vehicle outside (Vo)) of the outer shoulder circumferential groove (8o) and includes the outer tread edge (3o).

Of the above-described land regions 6, the sum of widths W2a, W2b, and W2c in the tire axial direction of the center land region 11, the inner middle land region (12i), and the outer middle land region (12o), respectively, may be set to be in the range from 35% to 60% of the maximum ground contacting width (W) in the tire axial direction of the ground contact surface in the 70% loaded state. By setting the sum of the widths to 35% or more of the maximum ground contacting width (W), lateral rigidity and ground contacting area of each of the land regions 6 are ensured, thereby, steering stability is improved. On the other hand, by setting the sum of the widths to 60% or less of the maximum ground contacting width (W), the groove widths (W1) of the circumferential grooves 5 are secured (i.e., groove volume of the circumferential grooves 5 is secured), therefore, drainage performance is improved. From such a point of view, the sum of the widths is preferably 40% or more of the maximum ground contacting width (W), and is preferably 55% or less of the maximum ground contacting width (W).

[Groove-shaped Portions]

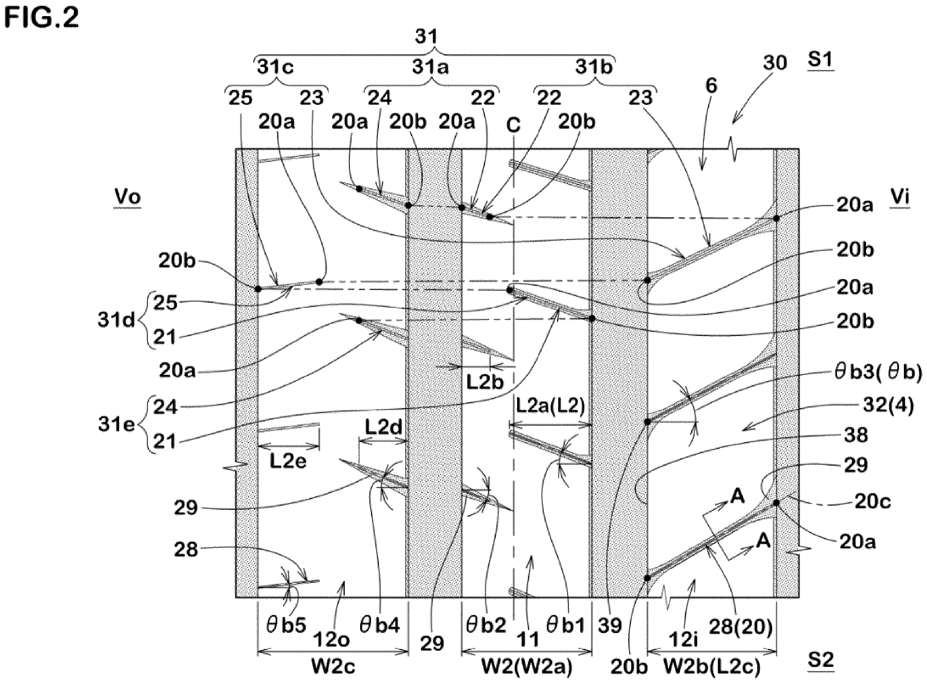

Each of the land regions 6 in the present embodiment has a plurality of groove-shaped portions 20 formed therein that are inclined with respect to the tire axial direction. These multiple groove-shaped portions 20 improve the wet performance. FIG. 2 is an enlarged partial view of the center land region 11, the inner middle land region (12i), and the outer middle land region (12o) of FIG. 1.

As shown in FIG. 2, each of the groove-shaped portions 20 has a first end (20a) on one side (S1) (first side (S1)) in the tire circumferential direction and a second end (20b) on the other side (S2) (second side (S2)) in the tire circumferential direction. In the present embodiment, the first end (20a) and the second end (20b) are identified by the ends of a groove centerline (20c) along the longitudinal direction in each of the groove-shaped portions 20. It should be noted that, when chamfered portions 29 are formed as in the groove-shaped portions 20 of the present embodiment, the first end (20a) and the second end (20b) are identified excluding the chamfered portion 29 (in the present example, the first end (20a) and the second end (20b) are identified based only on a sipe main body portion 28) for each of the groove-shaped portions 20.

Each of the groove-shaped portions 20 in the present embodiment (the groove-shaped portions provided in the center land region 11, the inner middle land region (12i), and the outer middle land region (12o) in the present example) includes the sipe main body portion 28 having a width (i.e., a width perpendicular to the longitudinal direction) of 2 mm or less. Each of the sipe main body portions 28 in the present embodiment is formed in a slit shape. These multiple groove-shaped portions 20 (the sipe main body portions 28) form edge components in the tread portion 2 while suppressing a decrease in the rigidity of the land regions 6 when in contact with the road surface, thereby, the steering stability performance is improved.

The groove-shaped portions 20 are not limited to those including the sipe main body portions 28, and may include groove main body portions (not shown) having a width (i.e., a width perpendicular to the longitudinal direction) greater than 2 mm, for example. The groove main body portions configured as such improve the wet performance. Further, depths (not shown) of the groove-shaped portions 20 may each be set to be in the range from 2 to 8 mm, for example.

As shown in FIG. 1, the groove-shaped portions 20 of the present embodiment include a plurality of first groove-shaped portions 21, a plurality of second groove-shaped portions 22, a plurality of third groove-shaped portions 23, a plurality of fourth groove-shaped portions 24, a plurality of fifth groove-shaped portions 25, a plurality of sixth groove-shaped portions 26, and a plurality of seventh groove-shaped portions 27. It should be noted that the groove-shaped portions 20 are not limited to an embodiment in which all of the first groove-shaped portions 21 to the seventh groove-shaped portions 27 are included, and some of these groove-shaped portions may be omitted or other groove-shaped portions (not shown) may be included depending on the performance and the like required of the tire 1, for example.

The first groove-shaped portions 21 and the second groove-shaped portions 22 are provided in the center land region 11. The first groove-shaped portions 21 in the present embodiment are arranged on the vehicle inside (Vi) of the center land region 11. On the other hand, the second groove-shaped portions 22 are disposed on the vehicle outside (Vo) of the center land region 11. It should be noted that the center land region 11 is not limited to the form in which the first groove-shaped portions 21 and the second groove-shaped portions 22 are provided, and some of these groove-shaped portions may be omitted, or other groove-shaped portions (not shown) may be included, for example.

The third groove-shaped portions 23 are provided in the inner middle land region (12i). It should be noted that the inner middle land region (12i) is not limited to the embodiment in which only the third groove-shaped portions 23 are formed, but the inner middle land region (12i) may include other groove-shaped portions (not shown), for example.

The fourth groove-shaped portions 24 and the fifth groove-shaped portions 25 are provided in the outer middle land region (12o). The fourth groove-shaped portions 24 in the present embodiment are disposed on the vehicle inside (Vi) of the outer middle land region (12o). On the other hand, the fifth groove-shaped portions 25 are arranged on the vehicle outside (Vo) of the outer middle land region (12o). It should be noted that the outer middle land region (12o) is not limited to the configuration in which the fourth groove-shaped portions 24 and the fifth groove-shaped portions 25 are provided, but some of these groove-shaped portions may be omitted, or other groove-shaped portions (not shown) may be included, for example.

The sixth groove-shaped portions 26 are formed in the inner shoulder land region (13i). It should be noted that the inner shoulder land region (13i) is not limited to the embodiment in which only the sixth groove-shaped portions 26 are provided, and the inner shoulder land region (13i) may include other groove-shaped portions (not shown), for example.

The seventh groove-shaped portions 27 are formed in the outer shoulder land region (13o). It should be noted that the outer shoulder land region (13o) is not limited to the form in which only the seventh groove-shaped portions 27 are provided, but the outer shoulder land region (13o) may include other groove-shaped portions (not shown), for example.

[Arrangement Rule]

As shown in FIG. 2, the groove-shaped portions 20 of the present embodiment are arranged over the entire circumference in the tire circumferential direction based on a predetermined arrangement rule 30. The arrangement rule 30 in the present embodiment is directed to the groove-shaped portions 20 arranged in the center land region 11 and the pair of the middle land regions 12 (the inner middle land region (12i) and the outer middle land region (12o)), but is not limited to such an arrangement. For example, only some of these land regions 6 may be subject to the arrangement rule 30, or other land regions 6 (the shoulder land regions 13 shown in FIG. 1) may be subject to the arrangement rule 30.

In the arrangement rule 30, for each of all pairs 31 of the groove-shaped portions 20 immediately adjacent to each other in the tire circumferential direction among the multiple groove-shaped portions 20, the first end (20a) of one groove-shaped portion 20 of the pair 31 and the second end (20b) of the other groove-shaped portion 20 of the pair 31 are formed at the same position in the tire circumferential direction. Further, the groove-shaped portions 20 constituting the pair 31 may be formed in the same land region 6 or in different land regions 6.

Here, whether the first end (20a) of one groove-shaped portion 20 of the pair 31 and the second end (20b) of the other groove-shaped portion 20 of the pair 31 are at the same position in the tire circumferential direction is determined by using their groove centerlines (20c). That is, the first end (20a) of one groove-shaped portion 20 of the pair 31 and the second end (20b) of the other groove-shaped portion 20 of the pair 31 are each identified by an end of the respective groove centerline (20c). However, in consideration of the characteristics of the tire 1, which is a vulcanized rubber product, and from the standpoint of allowing for manufacturing tolerances, the expression "same position" also includes a state in which the first end (20a) and the second end (20b) are shifted by a small distance in the tire circumferential direction. In this case, the circumferential distance between the first end (20a) and the second end (20b) in each pair 31 is set to 5% or less, preferably 3% or less, and more preferably 1% or less, of the total of the circumferential lengths of the two groove-shaped portions 20 that make up the pair 31. It is most preferable that the first end (20a) and the second end (20b) are substantially not misaligned in the tire circumferential direction (less than 0.1%, for example).

The pairs 31 of the present embodiment include first pairs (31a), second pairs (31b), third pairs (31c), fourth pairs (31d), and fifth pairs (31e). It should be noted that some of these pairs 31 may be omitted, or other pairs may be included in the pairs 31. The groove-shaped portions 20 constituting each of the pairs 31 in the present embodiment are formed in the land regions 6 that are different from each other.

Each of the first pairs (31a) is composed of one of the fourth groove-shaped portions 24 and one of the second groove-shaped portions 22. In each of the first pairs (31a), the second groove-shaped portion 22 is adjacent to the fourth groove-shaped portion 24 on the other side (S2) in the tire circumferential direction. In each of the first pairs (31a) in the present embodiment, the fourth groove-shaped portion 24 is formed in the outer middle land region (12o), and the second groove-shaped portion 22 is formed in the center land region 11. In other words, the groove-shaped portions 20 constituting each of the first pairs (31a) are formed in different land regions 6 from each other. Further, in each of the first pairs (31a), the first end (20a) of the second groove-shaped portion 22 and the second end (20b) of the fourth groove-shaped portion 24 are formed at the same position in the tire circumferential direction.

Each of the second pairs (31b) is composed of one of the second groove-shaped portions 22 and one of the third groove-shaped portions 23. In each of the second pairs (31b), the third groove-shaped portion 23 is adjacent to the second groove-shaped portion 22 on the other side (S2) in the tire circumferential direction. In each of the second pairs (31b) in the present embodiment, the second groove-shaped portion 22 is formed in the center land region 11 and the third groove-shaped portion 23 is formed in the inner middle land region (12i). In other words, the groove-shaped portions 20 forming each of the second pairs (31b) are provided in different land regions 6, similar to the first pairs (31a). Further, in each of the second pairs (31b), the first end (20a) of the third groove-shaped portion 23 and the second end (20b) of the second groove-shaped portion 22 are formed at the same position in the tire circumferential direction.

Each of the third pairs (31c) is composed of one of the third groove-shaped portions 23 and one of the fifth groove-shaped portions 25. In each of the third pairs (31c), the fifth groove-shaped portion 25 is adjacent to the third groove-shaped portion 23 on the other side (S2) in the tire circumferential direction. In each of the third pairs (31c) in the present embodiment, the third groove-shaped portion 23 is formed in the inner middle land region (12i) and the fifth groove-shaped portion 25 is formed in the outer middle land region (12o). In other words, the groove-shaped portions 20 forming each of the third pairs (31c) are provided in different land regions 6, similar to the first pairs (31a) and the second pairs (31b). Further, in each of the third pairs (31c), the first end (20a) of the fifth groove-shaped portion 25 and the second end (20b) of the third groove-shaped portion 23 are formed at the same position in the tire circumferential direction.

Each of the fourth pairs (31d) is composed of one of the fifth groove-shaped portions 25 and one of the first groove-shaped portions 21. In each of the fourth pairs (31d), the first groove-shaped portion 21 is adjacent to the fifth groove-shaped portion 25 on the other side (S2) in the tire circumferential direction. In each of the fourth pairs (31d) in the present embodiment, the fifth groove-shaped portion 25 is formed in the outer middle land region (12o) and the first groove-shaped portion 21 is formed in the center land region 11. In other words, the groove-shaped portions 20 constituting each of the fourth pairs (31d) are provided in the land regions 6 different from each other, similar to the first pairs (31a), the second pairs (31b), and the third pairs (31c). Further, in each of the fourth pairs (31d), the first end (20a) of the first groove-shaped portion 21 and the second end (20b) of the fifth groove-shaped portion 25 are formed at the same position in the tire circumferential direction.

Each of the fifth pairs (31e) is composed of one of the first groove-shaped portions 21 and one of the fourth groove-shaped portions 24. In each of the fifth pairs (31e), the fourth groove-shaped portion 24 is adjacent to the first groove-shaped portion 21 on the other side (S2) in the tire circumferential direction. In each of the fifth pairs (31e) in the present embodiment, the first groove-shaped portion 21 is formed in the center land region 11 and the fourth groove-shaped portion 24 is formed in the outer middle land region (12o). In other words, the groove-shaped portions 20 forming each of the fifth pairs (31e) are disposed in the land regions 6 different from each other, similar to the first pairs (31a), the second pairs (31b), the third pairs (31c), and the fourth pairs (31d). Further, in each of the fifth pairs (31e), the first end (20a) of the fourth groove-shaped portion 24 and the second end (20b) of the first groove-shaped portion 21 are formed at the same position in the tire circumferential direction.

In the present embodiment, one of the first pairs (31a), one of the second pairs (31b), one of the third pairs (31c), one of the fourth pairs (31d), and one of the fifth pairs (31e) constitute each of the one-pitch regions (P) shown in FIG. 1. The first pair (31a), the second pair (31b), the third pair (31c), the fourth pair (31d), and the fifth pair (31e) are repeated in sequence. As a result, in the arrangement rule 30 in the present embodiment, the groove-shaped portions 20 constituting each of the pairs 31 (the first pairs (31a), the second pairs (31b), the third pairs (31c), the fourth pairs (31d), and the fifth pairs (31e)) are formed in different land regions 6 from each other.

Generally, pitch noise is known as a noise when tires are running. For example, every time areas 32 (the ground contacting surface 4) demarcated by the first groove-shaped portions 21 to the fifth groove-shaped portions 25 come into contact with the road surface, an impact force is generated. This impact force tends to cause the tread portion 2 and the sidewall portions (not shown) to vibrate periodically, which results in the pitch noise (pitch sound).

In the present embodiment, due to the arrangement rule 30 described above, the first groove-shaped portions 21 to the fifth groove-shaped portions 25 come into contact with the ground (road surface) alternately and continuously from the one side (S1) to the other side (S2) (or from the other side (S2) to the one side (S1)) in the tire circumferential direction while the tire is running. As a result, fluctuation in the impact force is decreased. Therefore, the pitch noise (pitch sound) generated from the land regions 6 (the areas 32) is reduced in the tire 1 of the present embodiment, thereby, it is possible that the noise performance is improved.

In the arrangement rule 30 of the present embodiment, in each of the pairs 31, the groove-shaped portions 20 constituting the each of the pairs 31 are formed in different land regions 6. As a result, the groove-shaped portions 20 constituting the each of the pairs 31 are not formed continuously in each of the land regions 6 in the present embodiment. Therefore, in order to form the first end (20a) and the second end (20b) at the same circumferential position in each of the pairs 31, it is not necessary to increase angles $\theta b$ of the groove-shaped portions 20 with respect to the tire axial direction or to increase the number of the groove-shaped portions 20 formed in each of the land regions 6, for example. Therefore, the rigidity in the tire axial direction of each of the land regions 6 is prevented from decreasing more than necessary, thereby, it is possible that both the steering stability and the noise performance (quietness) are achieved.

In the arrangement rule 30 of the present embodiment, the groove-shaped portions 20 constituting the pairs 31 are formed in the center land region 11 and the middle land regions 12 (the inner middle land region (12i) and the outer middle land region (12o)). Since the ground contact pressure in the center land region 11 and the middle land regions 12 tends to be relatively large during straightaway driving, it is possible that the pitch noise is effectively reduced. Further, since the groove-shaped portions 20 constituting the pairs 31 are formed in three or more different land regions 6, a decrease in the rigidity in the tire axial direction of the land regions 6 is prevented, and thus the steering stability is further improved.

In the arrangement rule 30 of the present embodiment, the groove-shaped portions 20 constituting each of the pairs 31 are formed in different land regions 6, but the present invention is not limited to such an embodiment. In each of the pairs 31, the groove-shaped portions 20 may be formed in the same land region 6, for example. In this case, in each of the land regions 6, the groove-shaped portions 20 constituting the pairs 31 alternately and continuously contact the ground, so that the fluctuation of the impact force is further reduced. Furthermore, when the number of the groove-shaped portions 20 is increased, for example, in order to form the first end (20a) and the second end (20b) at the same circumferential position in each of the pairs 31, the edge components are increased, therefore, the wet performance and the like is improved.

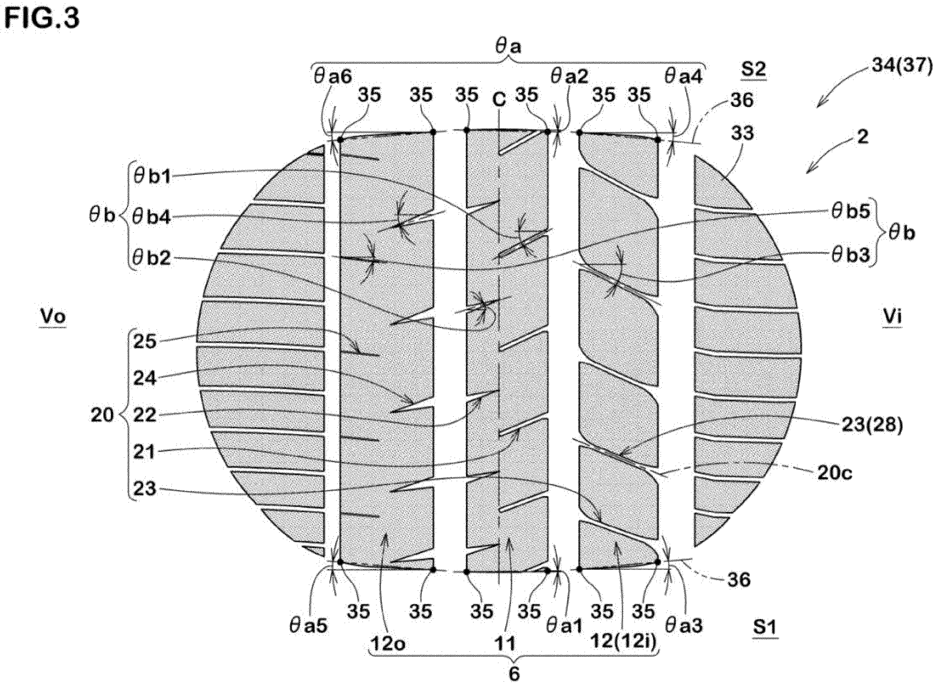

FIG. 3 is a diagram showing an example of a footprint 34 of the tread portion 2 in the 70% loaded state. The footprint 34 in FIG. 3 shows the tread pattern in which the one side (S1) and the other side (S2) in the tire circumferential direction are inverted.

In the present embodiment, in the 70% loaded state, ground contact edges 33 on both sides in the tire circumferential direction of at least one of the land regions 6 have angles $\theta a$ with respect to the tire axial direction. In the present embodiment, the absolute value of the difference between one of the angles $\theta a$ and the angle $\theta b$ of one of the groove-shaped portions 20 formed in at least one of the land regions 6 with respect to the tire axial direction is set to 5 degrees or more. It should be noted that the angles $\theta b$ used in calculating the absolute value are specified in the 70% loaded state, similar to the angles $\theta a$. Moreover, the angles $\theta a$ and $\theta b$ may be obtained from the footprint 34 obtained by a known procedure, or may be obtained from the calculation results of a ground contact simulation using a computer.

Each of the angles $\theta a$ is determined for each of the land regions 6 by a linear line 36 passing through both ends 35 in a width direction of the tire 1 at the ground contact edge 33 on the one side S1 or the ground contact edge 33 on the other side S2 of the each of the land regions 6 (i.e., the concerned land region 6). Further, the angles $\theta a$ in the present embodiment are specified in the land regions 6 (in the present example, the center land region 11, the inner middle land region (12i), and the outer middle land region (12o)) in which the groove-shaped portions 20 that are the subject of the arrangement rule 30 shown in FIG. 2 are formed. Therefore, the angles $\theta a$ include an angle $\theta a1$ of the ground contact edge 33 on the one side (S1) in the tire circumferential direction of the center land region 11, and an angle $\theta a2$ of the ground contact edge 33 on the other side (S2) in the tire circumferential direction of the center land region 11. Furthermore, the angles $\theta a$ includes an angle $\theta a3$ of the ground contact edge 33 on the one side (S1) in the tire circumferential direction of the inner middle land region (12i), and an angle $\theta a4$ of the ground contact edge 33 on the other side (S2) in the tire circumferential direction of the inner middle land region (12i). In addition, the angles $\theta a$ includes an angle $\theta a5$ of the ground contact edge 33 on the one side (S1) in the tire circumferential direction of the outer middle land region (12o), and an angle $\theta a6$ of the ground contact edge 33 on the other side (S2) in the tire circumferential direction of the outer middle land region (12o).

The angles θa1 to θa6 of the ground contact edges 33 of the land regions 6 are specified, as they go from the vehicle inside (Vi) to the vehicle outside (Vo), such that the angles inclining from the one side (S1) to the other side (S2) in the tire circumferential direction are positive angles, and the angles inclining from the other side (S2) to the one side (S1) in the tire circumferential direction are negative angles. In this case, in the inner middle land region (12i), the angle θa3 of the ground contact edge 33 on the one side (S1) is negative, and the angle θa4 of the ground contact edge 33 on the other side (S2) is positive. Further, in the outer middle land region (12o), the angle θa5 of the ground contact edge 33 on the one side (S1) is positive, and the angle θa6 of the ground contact edge 33 on the other side (S2) is negative.

The angles θa of the ground contact edges 33 and the shape of the ground contact surface 37 (footprint 34) can be adjusted as appropriate. Examples of adjustments include changing the thickness of the tread rubber of known structure arranged in the tread portion 2, or changing the tire components of known structure such as a carcass arranged inside the tread portion 2, for example.

For each of the groove-shaped portions 20, as shown in FIG. 2, each of the angles θb is determined in the 70% loaded state at a position 39 where the groove centerline (20c) along the longitudinal direction of the concerned groove-shaped portion 20 (the sipe main body portion 28 described later) intersects with one of edges 38 extending in the tire circumferential direction on both sides in the tire axial direction of the concerned land region 6. Therefore, the position 39 is the first end (20a) or the second end (20b) of the concerned groove-shaped portion 20. Further, the angles θb in the present embodiment are specified in the groove-shaped portions 20 that are subject to the arrangement rule 30 shown in FIG. 2. Thereby, the angles θb includes an angle θb1 of the first groove-shaped portions 21, an angle θb2 of the second groove-shaped portions 22, an angle θb3 of the third groove-shaped portions 23, an angle θb4 of the fourth groove-shaped portions 24, and an angle θb5 of the fifth groove-shaped portions 25.

Similar to the angles θa of the ground contact edges 33 of the land regions 6, the angles θb1 to θb5 of the groove-shaped portions 20 are specified as positive angles when the groove-shaped portions 20 are inclined from the one side (S1) to the other side (S2) in the tire circumferential direction as they go from the vehicle inside (Vi) to the vehicle outside (Vo). Further, the angles θb1 to θb5 of the groove-shaped portions 20 are specified as negative angles when they are inclined from the other side (S2) to the one side (S1) in the tire circumferential direction as they go from the vehicle inside (Vi) to the vehicle outside (Vo). Therefore, the angle θb1 of the first groove-shaped portions 21, the angle θb2 of the second groove-shaped portions 22, and the angle θb4 of the fourth groove-shaped portions 24 are negative. On the other hand, the angle θb3 of the third groove-shaped portions 23 and the angle θb5 of the fifth groove-shaped portions 25 are positive.

In the present embodiment, an absolute value of a difference (θa1-θb1) between the angle θa1 of the ground contact edge 33 on the one side (S1) of the center land region 11 and the angle θb1 of each of the first groove-shaped portions 21 formed in the center land region 11 is set to 5 degrees or more. Further, an absolute value of a difference (θa2-θb1) between the angle θa2 of the ground contact edge 33 on the other side (S2) of the center land region 11 and the angle θb1 of each of the first groove-shaped portions 21 is set to 5 degrees or more.

In the present embodiment, an absolute value of a difference (θa1-θb2) between the angle θa1 of the ground contact edge 33 on the one side (S1) of the center land region 11 and the angle θb2 of each of the second groove-shaped portions 22 formed in the center land region 11 is set to 5 degrees or more. Further, an absolute value of a difference (θa2-θb2) between the angle θa2 of the ground contact edge 33 on the other side (S2) of the center land region 11 and the angle θb2 of each of the second groove-shaped portions 22 is set to 5 degrees or more.

In the present embodiment, an absolute value of a difference (θa3-θb3) between the angle θa3 of the ground contact edge 33 on the one side (S1) of the inner middle land region (12i) and the angle θb3 of each of the third groove-shaped portions 23 formed in the inner middle land region (12i) is set to 5 degrees or more. Further, an absolute value of a difference (θa4-θb3) between the angle θa4 of the ground contact edge 33 on the other side (S2) of the inner middle land region (12i) and the angle θb3 of each of the third groove-shaped portions 23 is set to 5 degrees or more.

In the present embodiment, an absolute value of a difference (θa5-θb4) between the angle θa5 of the ground contact edge 33 on the one side (S1) of the outer middle land region (12o) and the angle θb4 of each of the fourth groove-shaped portions 24 formed in the outer middle land region (12o) is set to 5 degrees or more. Furthermore, an absolute value of a difference (θa6-θb4) between the angle θa6 of the ground contact edge 33 on the other side (S2) of the outer middle land region (12o) and the angle θb4 of each of the fourth groove-shaped portions 24 is set to 5 degrees or more.

In the present embodiment, an absolute value of a difference (θa5-θb5) between the angle θa5 of the ground contact edge 33 on the one side (S1) of the outer middle land region (12o) and the angle θb5 of each of the fifth groove-shaped portions 25 formed in the outer middle land region (12o) is set to 5 degrees or more. Further, an absolute value of a difference (θa6-θb5) between the angle θa6 of the ground contact edge 33 on the other side (S2) of the outer middle land region (12o) and the angle θb5 of each of the fifth groove-shaped portions 25 is set to 5 degrees or more.

Thus, the absolute value of each of the differences between angles θa and θb is set to 5 degrees or more in the present embodiment, thereby, the inclination direction (including both the inclination angle and orientation) of each of the ground contact edges 33 is prevented from coinciding with the inclination direction of each of the corresponding groove-shaped portions 20 for each of the land regions 6. Therefore, it is possible that the groove-shaped portions 20 gradually come into contact with the ground (road surface) and come out of contact with the ground (road surface) while the tire is running. Therefore, when the ground contact edges 33 come into and out of contact with the ground, the air inside the groove-shaped portions 20 is prevented from being compressed or released in an instant, thereby, it is possible that the amplification of the volume of the pitch noise is suppressed.

In each of the pairs 31 of the tire 1 in the present embodiment, the first end (20a) of one of the groove-shaped portions 20 in the pair and the second end (20b) of the other one of the groove-shaped portions 20 in the pair are formed at the same position in the tire circumferential direction as shown in FIG. 2, thereby, it is possible that the pitch noise is decreased. Further, in the tire 1 of the present embodiment, as shown in Figure 3, the absolute value of the difference ($\theta a$-$\theta b$) between the angle $\theta a$ of one of the ground contact edges 33 and the angle $\theta b$ of one of the groove-shaped portions 20 in each of the land regions 6 is set to 5 degrees or more, therefore, it is possible that the amplification of the volume of the pitch noise is suppressed. Therefore, the tire 1 of the present embodiment makes it possible to reduce the pitch noise, thereby, the noise performance is improved.

In the present embodiment, it is preferred that the absolute value of the difference ($\theta a$-$\theta b$) between the angle $\theta a$ of one of the ground contact edges 33 and the angle $\theta b$ of one of the groove-shaped portions 20 is 5 degrees or more in the center land region 11 and the pair of the middle land regions (the inner middle land region (12i) and the outer middle land region (12o)). Since these land regions 6 mainly come into contact with the ground both during straightaway driving and during cornering, by setting the absolute value to 5 degrees or more, the amplification of the volume of the pitch noise is effectively suppressed, thereby, it is possible that the noise performance is further improved.

On the other hand, if the absolute value of the difference ($\theta a$-$\theta b$) between the angle $\theta a$ of one of the ground contact edges 33 and the angle $\theta b$ of one of the groove-shaped portions 20 is larger than necessary, the angle $\theta b$ of the groove-shaped portion 20 becomes larger and the tread rigidity becomes smaller, therefore, the steering stability may be decreased. For this reason, it is preferred that the absolute value of the difference ($\theta a$-$\theta b$) is 50 degrees or less.

The absolute value of the difference between the angle $\theta a$ of the inner middle land region (12i) and the angle $\theta b$ of the groove-shaped portions 20 formed in the inner middle land region (12i) may be equal to or greater than the absolute value of the difference between the angle $\theta a$ of the outer middle land region (12o) and the angle $\theta b$ of the groove-shaped portions 20 formed in the outer middle land region (12o). As described above, the angle differences in the inner middle land region (12i) include the difference ($\theta a3$-$\theta b3$) and the difference ($\theta a4$-$\theta b3$). Further, the angle differences in the outer middle land region (12o) include the difference ($\theta a5$-$\theta b4$), the difference ($\theta a6$-$\theta b4$), the difference ($\theta a5$-$\theta b5$), and the difference ($\theta a6$-$\theta b5$). Furthermore, all of the above-mentioned angle differences may satisfy the above-mentioned absolute value relationship in the present embodiment.

By making the absolute value of the angle difference in the inner middle land region (12i) equal to or greater than the absolute value of the angle difference in the outer middle land region (12o), large edge components can be formed in the inner middle land region (12i), where the ground contact pressure during cornering is relatively smaller than that in the outer middle land region (12o). Thereby, the wet performance is improved while the steering stability is maintained. In order to effectively exert such an effect, it is more preferred that the absolute value of the angle difference in the inner middle land region (12i) is larger than the absolute value of the angle difference in the outer middle land region (12o). Further, it is preferred that a difference between the absolute value of the difference between one of the angles $\theta a$ of the inner middle land region (the angle $\theta a3$ or $\theta a4$ in the present embodiment) and the angle $\theta b$ of the groove-shaped portions formed in the inner middle land region (the angle $\theta b3$ of each of the third groove-shaped portions 23 in the present embodiment) and the absolute value of the difference between one of the angles $\theta a$ of the outer middle land region (the angle $\theta a5$ or $\theta a6$ in the present embodiment) and the angle $\theta b$ of the groove-shaped portions formed in the outer middle land region (the angle $\theta b4$ of each of the fourth groove-shaped portions 24 and the angle $\theta b5$ of the fifth groove-shaped portions 25 in the present embodiment) is in the range from 3 to 25 degrees, and more preferably in the range from 5 to 15 degrees. In other words, the difference between a first absolute value of the inner middle land region (12i) and a second absolute value of the outer middle land region (12o) is preferably in the range from 3 to 25 degrees, and more preferably in the range from 5 to 15 degrees. The first absolute value of the inner middle land region (12i) includes the absolute values of the angle differences ($\theta a3$-$\theta b3$) and ($\theta a4$-$\theta b3$). The second absolute value of the outer middle land region (12o) includes the absolute values of the angle differences ($\theta a5$-$\theta b4$), ($\theta a5$-$\theta b5$), ($\theta a6$-$\theta b4$), and ($\theta a6$-$\theta b5$). Furthermore, all of the above-mentioned angle differences may satisfy the above-mentioned difference ranges of the absolute values in the present embodiment.

In addition, the absolute value (the first absolute value) of the difference between the angle $\theta a$ of the inner middle land region (12i) and the angle $\theta b$ of the groove-shaped portions 20 formed in the inner middle land region (12i) may be equal to or greater than the absolute value (third absolute value) of the difference between the angle $\theta a$ of the center land region 11 and the angle $\theta b$ of the groove-shaped portions 20 formed in the center land region 11. Further, the absolute value (the third absolute value) of the difference between the angle $\theta a$ of the center land region 11 and the angle $\theta b$ of the groove-shaped portions 20 formed in the center land region 11 may be equal to or greater than the absolute value (the second absolute value) of the difference between the angle $\theta a$ of the outer middle land region (12o) and the angle $\theta b$ of the groove-shaped portions 20 formed in the outer middle land region (12o). As described above, the third absolute value of the center land region 11 includes the absolute values of the angle differences ($\theta a1$-$\theta b1$), ($\theta a2$-$\theta b1$), ($\theta a1$-$\theta b2$), and ($\theta a2$-$\theta b2$) in the

present embodiment. Furthermooe, all of the above-mentioned angle differences may satisfy the above-mentioned absolute value relationships in the present embodiment.

The absolute value of the angle difference in the inner middle land region (12i) is made greater than or equal to the absolute value of the angle difference in the center land region 11, and the absolute value of the angle difference in the center land region 11 is made greater than or equal to the absolute value of the angle difference in the outer middle land region (12o). As a result, the edge components gradually increase toward the inside of the vehicle, where the ground contact pressure during cornering is relatively small. Therefore, a transient characteristic (the steering stability performance) during cornering is improved while the wet performance is maintained. In order to effectively exert such an effect, it is more preferred that the absolute value of the angle difference in the inner middle land region (12i) is greater than the absolute value of the angle difference in the center land region 11, and similarly, it is more preferred that the absolute value of the angle difference in the center land region 11 is greater than the absolute value of the angle difference in the outer middle land region (12o). Further, it is preferred that a difference between the absolute value of the difference between one of the angles $\theta a$ of the inner middle land region (the angles $\theta a3$ or $\theta a4$ in the present embodiment) and the angle $\theta b$ of the groove-shaped portions formed in the inner middle land region (the angle $\theta b$ of each of the third groove-shaped portions 23 in the present embodiment) and the absolute value of the difference between one of the angles $\theta a$ of the center land region (the angle $\theta a1$ or the angle $\theta a2$ in the present embodiment) and the angle $\theta b$ of the groove-shaped portions formed in the center land region (the angle $\theta b1$ of each of the first groove-shaped portions 21 and the angle $\theta b2$ of each of the second groove-shaped portions 22 in the present embodiment) is in the range from 3 to 15 degrees, and more preferably in the range from 5 to 10 degrees. In other words, the difference between the first absolute value of the inner land region and the third absolute value of the center land region is preferably in the range from 3 to 15 degrees, and more preferably in the range from 5 to 10 degrees.

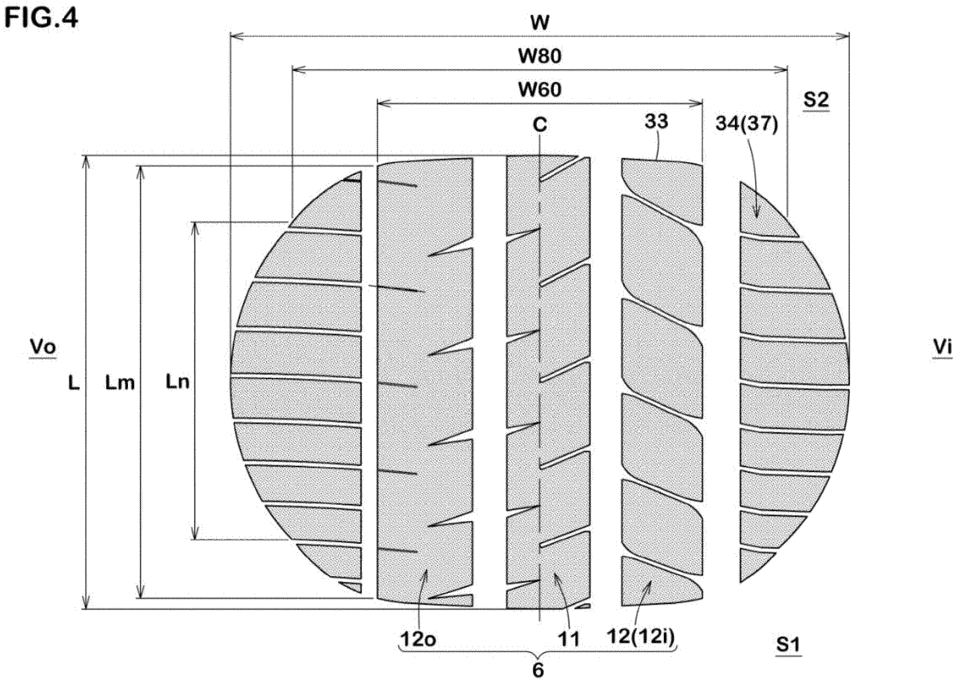

FIG. 4 is a diagram showing a maximum ground contact length (L) and a ground contacting length (Lm) in the footprint 34 of the tread portion 2 in the 70% loaded state. It is preferred that a ratio L/Lm between the maximum ground contact length (L) in the tire circumferential direction and the ground contacting length (Lm) in the tire circumferential direction of the ground contact surface 37 of the tread portion 2 in the 70% loaded state satisfies the following Expression (1). The ground contacting length (Lm) is specified within a range W60 that is centered on the tire equator (C) and is not greater than 60% of the maximum ground contacting width (W) in the tire axial direction.

$$1.00 \le L/Lm < 1.10 \qquad \text{Expression (1)}$$

When the ratio L/Lm satisfies the above formula (1), the ground contact edges 33 of each of the land regions 6 have a flat shape along the tire axial direction in the region of the ground contact surface 37 where the ground contact pressure is high during straightaway driving (i.e., in the range W60 which is equal to or less than 60% of the maximum ground contacting width (W)). This decreases the absolute value of the angle $\theta a$ (shown in FIG. 3) of each of the ground contact edges 33 of each of the land regions 6 (the center land region 11, the inner middle land region (12i), and the outer middle land region (12o) in the present example). Therefore, the absolute value of the difference ($\theta a$-$\theta b$) described above is 5 degrees or more, which makes it possible to easily suppress the amplification of the volume of the pitch noise. Further, since the ground contacting length (Lm) is maintained large in the above-mentioned range W60 (the center land region 11, the inner middle land region (12i) and the outer middle land region (12o)), the steering stability is improved. In order to effectively exert such an action, the ratio L/Lm is preferably 1.08 or less, and more preferably 1.06 or less. Similarly, it is preferred that the absolute value of the angle $\theta a$ of each of the ground contact edges 33 shown in FIG. 3 is in the range from 0 to 15 degrees.

Further, it is preferred that the ground contact surface 37 of the tread portion 2 in the 70% loaded state has a ratio L/Ln between the maximum ground contact length (L) in the tire circumferential direction and a ground contacting length (Ln) in the tire circumferential direction satisfying the following Expression (2). The ground contacting length (Ln) is a length in the tire circumferential direction of an area of the ground contact surface 37 having a width W80 of 80% of the maximum ground contacting width (W) in the tire axial direction with the tire equator (C) at the center in the tire axial direction of the area of the width W80.

$$1.15 < L/Ln < 1.50 \qquad \text{Expression (2)}$$

When the ratio L/Ln satisfies the above Expression (2), the ground contact edges on both sides in the tire axial direction become rounded, therefore, the ground contacting width gradually increases when a heavy load is applied. This provides better cushioning during impacts and thus improves ride comfort. In addition, resistance to water on the road surface is reduced, therefore, the wet performance (anti-hydroplaning performance) is improved. Further, even if lateral force is increased during cornering, the ground contacting width gradually widens, thereby, localized increases in the ground contact pressure are suppressed. Therefore, the steering stability performance is improved. In order to effectively exert such an action, the ratio L/Ln is preferably 1.20 or more, and the ratio L/Ln is preferably 1.40 or less.

Noise occurs not only in the groove-shaped portions 20 shown in FIG. 1, but also in the circumferential grooves 5 during running. The Circumferential grooves 5 mainly generate air column resonance noise. In order to reduce such air column resonance noise, at least one protruding portion protruding in the tire radial direction may be formed at the groove bottom of the circumferential grooves 5. FIG. 5 is an enlarged perspective view showing an example of the protruding portions 41 provided in the inner shoulder circumferential groove (8i).

The protruding portions 41 protrude radially outward from a groove bottom 40, therefore, it is possible that air passing through the circumferential grooves 5 is disturbed while the tire is running. Thereby, it is possible that the air column resonance noise that is likely to occur in the circumferential grooves 5 is reduced.

The protruding portions 41 in the present embodiment include first protruding portions 41A and second protruding portions 41B. The first protruding portions 41A and the second protruding portions 41B are adjacent to each other in the tire axial direction in the circumferential grooves 5.

Each of the first protruding portions 41A and the second protruding portions 41B includes a first surface 43 and a second surface 44. The first surface 43 extends in the tire radial direction. The second surface 44 is disposed on a side opposite to the first surface 43 in the tire circumferential direction, and extends at a larger angle than the first surface 43 with respect to the tire radial direction.

In each of the first protruding portions 41A, the first surface 43 faces the other side (S2) in the tire circumferential direction, and the second surface 44 faces the one side (S1) in the tire circumferential direction. On the other hand, in each of the second protruding portions 41B, the first surface 43 faces the one side (S1) in the tire circumferential direction, and the second surface 44 faces the other side (S2) in the tire circumferential direction. In this manner, since the first protruding portions 41A and the second protruding portions 41B have different circumferential orientations of the first surfaces 43 and the second surfaces 44, the air in the circumferential grooves 5 can be effectively disturbed, therefore, it is possible that air column resonance noise is reduced. The protruding portions 41 configured as such can be formed based on the description in Japanese Unexamined Patent Application Publication No. 2020-196281, for example.

The air column resonance noise tends to be louder in the center circumferential grooves 7 among the multiple circumferential grooves 5 shown in FIG. 1. For this reason, it is preferred that the protruding portions 41 are formed in at least the center circumferential grooves 7. The protruding portions 41 in the present embodiment are formed not only in the center circumferential grooves 7 but also in the shoulder circumferential grooves 8. Therefore, it is possible that the air column resonance noise is effectively reduced.

In each of the land regions 6 shown in FIG. 1, it is preferred that the total of lengths L2 (shown in FIG. 2) in the tire axial direction of the groove-shaped portions 20 formed in each of the one-pitch regions (P), i.e., in a single one-pitch region (P), is set to be in the range from 60% to 120% of a width W2 in the tire axial direction of the each of the land regions 6. As shown in FIG. 2, for each of the groove-shaped portions 20, the length L2 is specified as a distance in the tire axial direction between the first end (20a) and the second end (20b) of the groove-shaped portion 20 (the sipe main body portion 28).

Since the total of the lengths L2 of the groove-shaped portions 20 in each of the land regions 6 is set to 60% or more of the width W2 of the concerned land region 6, it is possible that the first end (20a) of one groove-shaped portion 20 and the second end (20b) of the other groove-shaped portion 20 in each of the pairs 31 are formed at the same circumferential position without increasing the absolute value of the angle θb of the groove-shaped portions 20. This suppresses the decrease in the lateral rigidity of the land regions 6 due to an increase in the absolute value of the angles θb, thereby, the steering stability is improved. Further, since the total of the lengths L2 is set to 120% or less of the width W2 of the each of the land regions 6, the groove-shaped portions 20 formed in the one-pitch regions (P) are prevented from becoming more than necessary, therefore, the steering stability is maintained. From such a point of view, the total of the lengths L2 in each of the land regions 6 is preferably 70% or more, and preferably 110% or less of the width W2 of the each of the land regions 6.

It is preferred that the average angle of all the groove-shaped portions 20 with respect to the tire axial direction (the average angle of the absolute values of the angles θb1 to θb5) is in the range from 10 to 50 degrees. By setting the average angle to 10 degrees or more, the inclination of the groove-shaped portions 20 of each of the land regions 6 makes it possible to form the first end (20a) of one groove-shaped portion 20 and the second end (20b) of the other groove-shaped portion 20 at the same position in the tire circumferential direction in each of the pairs 31. On the other hand, by setting the average angle to 50 degrees or less, the decrease in the lateral rigidity of the land regions 6 caused by an increase in the angles θb of the groove-shaped portions 20 is suppressed, and thus the steering stability is improved. From such a point of view, the average angle is preferably 15 degrees or more and is preferably 45 degrees or less.

In each of the center land region 11 and the outer middle land region (12o), at least one of the groove-shaped portions 20 may have at least one of the first end (20a) and the second end (20b) terminating within the concerned land region 6. This minimizes the decrease in the rigidity of the center land region 11 and the outer middle land region (12o), where the ground contact pressure is relatively large during cornering, therefore, the steering stability performance and braking performance are improved.

As described above, the center land region 11 has a plurality of the first groove-shaped portions 21 and a plurality of the second groove-shaped portions 22 formed therein. The first groove-shaped portions 21 have the first ends (20a) terminating to have closed ends within the center land region 11, and the second ends (20b) communicating with the inner center circumferential groove (7i) (shown in FIG. 1). On the other hand, the second groove-shaped portions 22 have the first ends (20a) communicating with the outer center circumferential groove (7o) (shown in FIG. 1) and the second ends (20b) terminating to have closed ends within the center land region 11. In this manner, at least one of the first ends (20a) and the second ends (20b) of the first groove-shaped portions 21 and the second groove-shaped portions 22 terminate within the center land region 11, thereby, the decrease is minimized in the rigidity of the center land region 11, where the ground contact pressure is relatively high during cornering and straightaway driving. Therefore, the steering stability performance and the braking performance are improved.

Each of the second groove-shaped portions 22 has a length (L2b) in the tire axial direction smaller than a length (L2a) in the tire axial direction of each of the first groove-shaped portions 21. As a result, in the center land region 11, the rigidity is relatively high in a part on the vehicle outside (Vo) where the ground contact pressure during cornering is relatively large, therefore, the steering stability performance is improved. On the other hand, large edge components are formed on the vehicle inside (Vi) of the center land region 11, thereby, the wet performance is improved. In order to effectively exert such an effect, it is preferred that the length (L2b) of each of the second groove-shaped portions 22 is set to be in the range from 30% to 75% of the length (L2a) of each of the first groove-shaped portions 21.

The first groove-shaped portions 21 and the second groove-shaped portions 22 may be arranged alternately, one by one in the present embodiment, in the tire circumferential direction in the center land region 11. As a result, the edge components by the first groove-shaped portions 21 and the second groove-shaped portions 22 are evenly formed in the tire circumferential direction on both sides of the center land region 11 in the tire axial direction, thereby, the wet performance is improved.

Each of the first groove-shaped portions 21 and the second groove-shaped portions 22 is inclined from the one side S1 to the other side S2 as it geos from the vehicle outside (Vo) to the vehicle inside (Vi) so as to have the first end (20a) on the vehicle outside (Vo) and the second end (20b) on the vehicle outside (20b). Therefore, the first groove-shaped portions 21 and the second groove-shaped portions 22 are inclined to the same side as each other with respect to the tire axial direction.

It is preferred that the absolute values of the angles $\theta b1$ of the first groove-shaped portions 21 with respect to the tire axial direction and the absolute values of the angles $\theta b2$ of the second groove-shaped portions 22 with respect to the tire axial direction are each set to be in the range from 10 to 30 degrees. It should be noted that whether the absolute values of the angles $\theta b1$ and $\theta b2$ are within the range of 10 to 30 degrees is determined in the standard state. By setting the absolute values of these angles $\theta b1$ and $\theta b2$ to 30 degrees or less, the rigidity of the center land region 11 is maintained, therefore, the steering stability performance and the braking performance are improved. On the other hand, by setting the absolute values of the angles $\theta b1$ and $\theta b2$ to 10 degrees or more, the edge components are formed to be large, thereby, the wet performance is improved. From such a point of view, each of the absolute values of the angles $\theta b1$ and $\theta b2$ is preferably 25 degrees or less, and preferably 15 degrees or more.

As described above, the outer middle land region (12o) has a plurality of the fourth groove-shaped portions 24 and a plurality of the fifth groove-shaped portions 25 formed therein. The fourth groove-shaped portions 24 have the first ends (20a) terminating to have closed ends within the outer middle land region (12o) and the second ends (20b) communicating with the outer center circumferential groove (7o) (shown in FIG. 1). On the other hand, the fifth groove-shaped portions 25 have the first ends (20a) terminating to have closed ends within the outer middle land region (12o) and the second ends (20b) communicating with the outer shoulder circumferential groove (8o) (shown in FIG. 1). In this manner, at least one of the first ends (20a) and the second ends (20b) of the fourth groove-shaped portions 24 and the fifth groove-shaped portions 25 terminate within the outer middle land region (12o), thereby, the decrease is minimized in the rigidity of the outer middle land region (12o), where the ground contact pressure is relatively high during cornering. Therefore, the steering stability performance is improved.

It is preferred that the first end (20a) of each of the fourth groove-shaped portions 24 and the first end (20a) of each of the fifth groove-shaped portions 25 are spaced apart in the tire axial direction. Therefore, the decrease is suppressed in the rigidity of the outer middle land region (12o) where the ground contact pressure is relatively high during cornering, thereby, the steering stability performance is improved. Further, a length (L2d) in the tire axial direction of each of the fourth groove-shaped portions 24 and a length (L2e) in the tire axial direction of each of the fifth groove-shaped portions 25 may be set to be the same. As a result, the edge components of the same length formed by the fourth groove-shaped portions 24 and the fifth groove-shaped portions 25 are evenly formed in the tire circumferential direction on both sides in the tire axial direction of the outer middle land region (12o) where the ground contact pressure is relatively high during cornering, thereby, the wet performance is improved.

The fourth groove-shaped portions 24 and the fifth groove-shaped portions 25 may be arranged alternately, one by one in the present embodiment, in the tire circumferential direction in the outer middle land region (12o). As a result, the edge components are formed evenly in the tire circumferential direction on both sides in the tire axial direction of the outer middle land region (12o), therefore, the wet performance is improved.

Each of the fourth groove-shaped portions 24 is inclined from the vehicle outside (Vo) to the vehicle inside (Vi) as it goes from the first end (20a) to the second end (20b). In other words, each of the fourth groove-shaped portions 24 is inclined from the one side S1 to the other side S2 with respect to the tire axial direction as it goes from the vehicle outside (Vo) to the vehicle inside (Vi). Therefore, the fourth groove-shaped portions 24 are inclined to the same side with respect to the tire axial direction as the first groove-shaped portions 21 and the second groove-shaped portions 22. On the other hand, each of the fifth groove-shaped portions 25 is inclined from the vehicle inside (Vi) to the vehicle outside (Vo) as it goes from the first end (20a) to the second end (20b). In other words, each of the fifth groove-shaped portions 25 is inclined from the other side S2 to the one side S1 with respect to the tire axial direction as it goes from the vehicle outside (Vo) to the vehicle inside (Vi). Therefore, the fourth groove-shaped portions 24 and the fifth groove-shaped portions 25 are inclined to opposite sides to each other with respect to the tire axial direction. The fourth groove-shaped portions 24 and the fifth groove-shaped portions 25 form the edge components in different directions on both sides in the tire axial direction of the outer middle land region (12o), thereby, the wet performance is improved.

It is preferred that the absolute value of the angle $\theta b4$ of each of the fourth groove-shaped portions 24 with respect to the tire axial direction is set to be in the range from 10 to 30 degrees. It should be noted that the whether the absolute value of the angle ($\theta b4$) is in the range from 10 to 30 degrees is determined in the standard state. By setting the absolute value of the angle $\theta b4$ to 30 degrees or less, the rigidity of the outer middle land region (12o), where the ground contact pressure is large during both straightaway driving and cornering, is maintained, and thus the steering stability performance is improved. On the other hand, by setting the angle $\theta b4$ to 10 degrees or more, the edge components are formed large, and thus the wet performance is improved. From such a point of view, the absolute value of angle $\theta b4$ is preferably 25 degrees or less, and is preferably 15 degrees or more.

It is preferred that the absolute value of the angle $\theta b5$ of each of the fifth groove-shaped portions 25 with respect to the tire axial direction is smaller than the absolute value of the angle $\theta b4$ of each of the fourth groove-shaped portions 24. It should be noted that the absolute value of the angle $\theta b5$ is specified in the standard state. By setting the absolute value of the angle $\theta b5$ to be smaller than the absolute value of the angle $\theta b4$, the rigidity of the part of the outer middle land region (12o) on the vehicle outside (Vo), where the ground contact pressure during cornering is relatively high, is increased, thereby, the steering stability performance is improved while the wet performance is maintained. In order to effectively exert such an effect, it is preferred that the absolute value of the angle $\theta b5$ of each of the fifth groove-shaped portions 25 is set to be in the range from 5 to 25 degrees.

In the inner middle land region (12i), at least one of the groove-shaped portions 20 (the third groove-shaped portion 23 in the present example) may have both the first end (20a) and the second end (20b) that communicate with any of the circumferential grooves 5 (the inner center circumferential groove (7i) and the inner shoulder circumferential groove (8i) in the present example) shown in FIG. 1. Therefore, continuous edge components that axially cross the inner middle land region (12i) (the edge components each completely cross the inner middle land region (12i) in the tire axial direction in the present example) are formed, thereby, the wet performance is improved. Further, the inner middle land region (12i) tends to have a relatively smaller ground contact pressure during cornering than the center land region 11 and the outer middle land region (12o). Therefore, even if a plurality of the groove-shaped portions 20 communicating with the circumferential grooves 5 are provided in the inner middle land region (12i), it is possible that the steering stability performance is maintained.

The third groove-shaped portions 23 and the first groove-shaped portions 21 may be arranged alternately, one by one in the present embodiment, in the tire circumferential direction. As a result, in the inner middle land region (12i) and the center land region 11 adjacent to each other with the inner center circumferential groove (7i) (shown in FIG. 1) therebetween, the edge components formed by the third groove-shaped portions 23 and the first groove-shaped portions 21 are evenly formed in the tire circumferential direction, thereby, the wet performance is improved.

The third groove-shaped portions 23 are inclined from the vehicle inside (Vi) to the vehicle outside (Vo) as they go from the first end (20a) to the second end (20b). In other words, each of the third groove-shaped portions 23 is inclined from the other side S2 to the one side S1 with respect to the tire axial direction as it goes from the vehicle outside (Vo) to the vehicle inside (Vi). Therefore, the third groove-shaped portions 23 are inclined to the opposite side to the first groove-shaped portions 21 and the second groove-shaped portions 22. Due to the third groove-shaped portions 23 configured as such, the inner middle land region (12i) have the edge components in a different direction from the edge components in the center land region 11, thereby, the wet performance is improved.

It is preferred that the absolute value of the angle $\theta b3$ of each of the third groove-shaped portions 23 with respect to the tire axial direction is set to be in the range from 20 to 40 degrees. It should be noted that the absolute value of the angle $\theta b3$ is specified in the standard state. By setting the absolute value of the angle $\theta b3$ to 20 degrees or more, it is possible that large edge components are formed in the inner middle land region (12i) where the ground contact pressure during cornering is relatively smaller than that in the center land region 11. Therefore, the wet performance is improved while the steering stability is maintained. On the other hand, by setting the angle $\theta b3$ to 40 degrees or less, the rigidity of the inner middle land region (12i) is prevented from becoming smaller than necessary, thereby, the steering stability performance is improved. From such a point of view, the absolute value of the angle $\theta b3$ is preferably 25 degrees or more and is preferably 35 degrees or less.

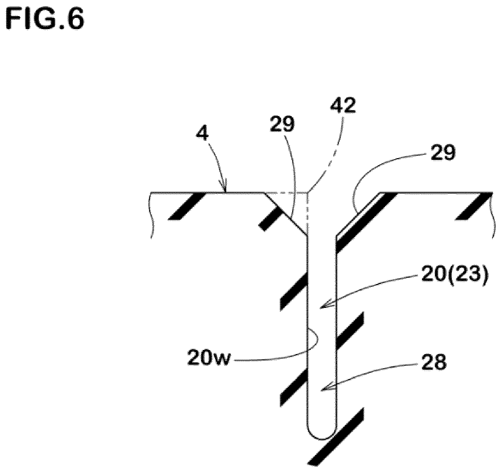

Further, at least one of the groove-shaped portions 20 may have a chamfered portion 29. FIG. 6 is a cross-sectional view taken along A-A line of FIG. 2. The chamfered portion 29 is formed as a sloping surface such that a ridge angle 42 formed by the ground contacting surface 4 and one of wall surfaces (20w) of the at least one of the groove-shaped portions 20 is truncated. The chamfered portion 29 can be set according to the description in Japanese Unexamined Patent Application Publication No. 2023-134124, for example.

With the chamfered portion 29, it is possible that the concentration of the ground contact pressure to the edges of the groove-shaped portions 20 is suppressed when a large load acts on the land regions 6 during cornering (when a lateral force is applied) or straightaway driving (when a front and rear force is applied). Therefore, the ground contact pressure acting on the land regions 6 is made uniform, thereby, the steering stability performance and the braking performance are improved.

As shown in FIG. 2, the second groove-shaped portions 22 in the present embodiment are provided with the chamfered portions 29. The chamfered portions 29 configured as such suppress concentration of the ground contact pressure onto the edges of the second groove-shaped portions 22 during cornering, thereby, the steering stability performance is improved. Further, each of the chamfered portions 29 may have a width perpendicular to the longitudinal direction of the each of the second groove-shaped portions 22 that gradually (and continuously in the present embodiment) decreases from the first end (20a) to the second end (20b) of the each of the second groove-shaped portions 22. It is possible that the chamfered portions 29 of the second groove-shaped portions 22 configured as such suppress uneven wear of the center land region 11.

The third groove-shaped portions 23 in the present embodiment are provided with the chamfered portions 29. The chamfered portions 29 configured as such suppress concentration of the ground contact pressure at the edges of the third groove-shaped portions 23 that completely cross the inner middle land region (12i) in the tire axial direction. Thereby, the steering stability performance and the braking performance are improved.

Further, it is preferred that each of the third groove-shaped portions 23 has the chamfered portions 29 formed over the entire longitudinal range of the each of the third groove-shaped portions 23, and that a width perpendicular to the longitudinal direction (the groove centerline (20c)) of each of the third groove-shaped portions 23 gradually (and continuously in the present embodiment) increases toward the first end (20a) and the second end (20b) from the center of the each of the third groove-shaped portions 23. The chamfered portions 29 of the third groove-shaped portions 23 configured as such suppress concentration of the ground contact pressure to the first ends (20a) and second ends (20b), therefore, it is possible that the uneven wear in the inner middle land region (12i) is suppressed.

The fourth groove-shaped portions 24 in the present embodiment are provided with the chamfered portion 29. The chamfered portions 29 configured as such suppress concentration of the ground contact pressure onto the edges of the fourth groove-shaped portions 24 during straightaway driving, thereby, the braking performance is improved. Further, each of the chamfered portion 29 may have a width perpendicular to the longitudinal direction of the each of the fourth groove-shaped portions 24 that gradually (and continuously in the present embodiment) decreases from the second end (20b) to the first end (20a) of the each of the fourth groove-shaped portions 24. It is possible that the chamfered portions 29 of the fourth groove-shaped portions 24 configured as such suppress the uneven wear in the outer middle land region (12o).

As shown in FIG. 1, the inner shoulder land region (13i) of the present embodiment is provided with a plurality of the sixth groove-shaped portions 26 formed therein. Each of the sixth groove-shaped portions 26 has the first end (20a) that communicates with the inner tread edge (3i) and the second end (20b) that communicates with the inner shoulder circumferential groove (8i). As a result, the sixth groove-shaped portions 26 form continuous edge components over a wide area of the inner shoulder land region (13i), therefore, the wet performance is improved.

The sixth groove-shaped portions 26 are inclined from the vehicle inside (Vi) to the vehicle outside (Vo) as they go from the first ends (20a) to the second ends (20b) thereof. In other words, each of the sixth groove-shaped portions 26 is inclined from the one side S1 to the other side S2 as it goes from the vehicle inside (Vi) to the vehicle outside (Vo). The absolute value of an angle $\theta b6$ of each of the sixth groove-shaped portions 26 gradually (and continuously in the present embodiment) increases with respect to the tire axial direction. Therefore, a rigidity change in the tire axial direction of the inner shoulder land region (13i) is made moderate, thereby, the steering stability is improved. In order to effectively exert such an effect, it is preferred that the absolute value of the angle $\theta b6$ is set to be in the range from 0 to 15 degrees.

The outer shoulder land region (13o) in the present embodiment is provided with a plurality of the seventh groove-shaped portions 27 formed therein. Each of the seventh groove-shaped portions 27 has the first end (20a) that communicates with the outer shoulder circumferential groove (8o) and the second end (20b) that communicates with the outer tread edge (3o). As a result, the seventh groove-shaped portions 27 form continuous edge components over a wide area of the outer shoulder land region (13o), therefore, the wet performance is improved.

The seventh groove-shaped portions 27 are inclined from the vehicle inside (Vi) to the vehicle outside (Vo) as they go from the first end (20a) to the second end (20b) thereof. In other words, each of the seventh groove-shaped portions 27 is inclined from the other side S2 to the one side S1 with respect to the tire axial direction as it goes from the vehicle outside (Vo) to the vehicle inside (Vi). The absolute value of an angle θb7 of each of the seventh groove-shaped portions 27 with respect to the tire axial direction gradually (and continuously in the present embodiment) increases. As a result, the rigidity change in the tire axial direction of the outer shoulder land region (13o) is made moderate, thereby, the steering stability is improved. In order to effectively exert such an effect, it is preferred that the absolute value of the angle θb7 is set to be in the range from 0 to 15 degrees.

While detailed description has been made of the present invention according to especially preferred embodiments, the present invention can be embodied in various forms without being limited to the illustrated embodiments and modifications.

[Statement of Invention]

The present invention includes the following aspects.

[Present Invention 1]

A tire including a tread portion, wherein

the tread portion includes a plurality of circumferential grooves each extending continuously in a tire circumferential direction and a plurality of land regions demarcated by the circumferential grooves,
each of the land regions is provided with a plurality of groove-shaped portions inclined with respect to a tire axial direction,
each of the groove-shaped portions has a first end on a first side in the tire circumferential direction and a second end on a second side opposite to the first side in the tire circumferential direction,
the groove-shaped portions are arranged over the entire circumference of the tire in the tire circumferential direction according to a predetermined arrangement rule,
in the arrangement rule, in each pair of all pairs of the groove-shaped portions adjacent to each other in the tire circumferential direction among the groove-shaped portions, the first end of one groove-shaped portion of the pair and the second end of the other groove-shaped portion of the pair are formed at the same position in the tire circumferential direction,
in each pair, the groove-shaped portions constituting the pair are formed in the same land region or in different land regions,
ground contact edges on both sides in the tire circumferential direction of at least one of the land regions have angles θa with respect to the tire axial direction in a 70% loaded state in which the tire is mounted on a standard rim, inflated to a standard inner pressure, and in contact with a flat surface with zero camber angle by being loaded with 70% of a standard tire load, and
an absolute value of a difference between one of the angles θa and an angle θb of the groove-shaped portions formed in the at least one of the land regions with respect to the tire axial direction is 5 degrees or more.

[Present Invention 2]

The tire according to Present Invention 1, wherein the groove-shaped portions in each pair are formed in different land regions.

[Present Invention 3]

The tire according to Present Invention 1 or 2, wherein

the land regions consist of a center land region and a pair of middle land regions, and
the absolute value is 5 degrees or more in all of the center land region and the middle land regions.

[Present Invention 4]

The tire according to any one of Present Inventions 1 to 3, wherein

the tread portion in the 70% loaded state has a ground contact surface,
the ground contact surface has a maximum ground contact length (L) in the tire circumferential direction and a ground contacting length (Lm) in the tire circumferential direction,
the ground contacting length (Lm) is a length in the tire circumferential direction of the ground contact surface in a range (W60) in the tire axial direction,

the range (W60) is a range of 60% or less of a maximum ground contacting width (W) in the tire axial direction of the ground contact surface of the tread portion in the 70% loaded state with a tire equator (C) at an axial center of the range (W60),

the maximum ground contacting width (W) is a distance in the tire axial direction between tread edges of the tread portion in the 70% loaded state, and

a ratio L/Lm between the maximum ground contact length (L) and the ground contacting length (Lm) satisfies a following Expression (1):

$$1.00 < L/Lm < 1.10 \qquad \text{Expression (1).}$$

[Present Invention 5]

The tire according to any one of Present Inventions 1 to 4, wherein an average angle of all of the groove-shaped portions with respect to the tire axial direction is from 10 to 50 degrees.

[Present Invention 6]

The tire according to any one of Present Inventions 1 to 5, wherein

the tread portion has a tread pattern in which one-pitch regions each forming a pattern constituent unit are arranged in the tire circumferential direction, and

in each of the land regions, a total of lengths in the tire axial direction of the groove-shaped portions formed in each of the one-pitch regions is from 60% to 120% of a width in the tire axial direction of the each of the land regions.

[Present Invention 7]

The tire according to any one of Present Inventions 1 to 6, wherein

the tread portion has a tread portion position for mounting the tire on a vehicle is specified regarding inner and outer sides of the tread portion with respect to the vehicle,

the land regions include a center land region arranged on a tire equator, and an outer middle land region arranged on the outer side with respect to the vehicle relative to the center land region, and

in each of the center land region and the outer middle land region, at least one of the groove-shaped portions has at least one of the first end (20a) and the second end (20b) terminating within the each of the center land region and the outer middle land region.

[Present Invention 8]

The tire according to Present Invention 7, wherein

the land regions include an inner middle land region arranged on the inner side with respect to the vehicle relative to the center land region, and

at least one of the groove-shaped portions in the inner middle land region has both of the first end and the second end communicating with any one of the circumferential grooves.

[Present Invention 9]

The tire according to Present Invention 8, wherein a sum of widths in the tire axial direction of the center land region, the inner middle land region, and the outer middle land region is from 35% to 60% of a maximum ground contacting width in the tire axial direction of a ground contact surface of the tread portion in the 70% loaded state.

[Present Invention 10]

The tire according to any one of Present Inventions 1 to 9, wherein each of the groove-shaped portions includes a sipe main body portion having a width of 2 mm or less.

[Present Invention 11]

The tire according to any one of Present Inventions 1 to 10, wherein at least one of the groove-shaped portions has a chamfered portion.

[Present Invention 12]

The tire according to any one of Present Inventions 1 to 11, wherein

the circumferential grooves include at least one center circumferential groove arranged on a tire equator side, and a groove bottom of the at least one center circumferential groove is provided with at least one protruding portion protruding outward in a tire radial direction.

[Present Invention 13]

The tire according to any one of Present Inventions 1 to 12, wherein

the tread portion has a tread portion position for mounting the tire on a vehicle is specified regarding inner and outer sides of the tread portion with respect to the vehicle,
the land regions include a center land region arranged on a tire equator, an outer middle land region arranged on the outer side with respect to the vehicle relative to the center land region, and an inner middle land region arranged on the inner side with respect to the vehicle relative to the center land region, and
a first absolute value of the inner middle land region is equal to or greater than a second absolute value of the outer middle land region,
the first absolute value is the difference between one of the angles $\theta a$ of the inner middle land region and the angle $\theta b$ of the groove-shaped portions formed in the inner middle land region, and
the second absolute value is the absolute value of the difference between one of the angles $\theta a$ of the outer middle land region and the angle $\theta b$ of the groove-shaped portions formed in the outer middle land region.

[Description of Reference Signs]

1    tire
2    tread portion
5    circumferential groove
6    land region
20   groove-shaped portion

**Claims**

1.  A tire comprising a tread portion, wherein

the tread portion includes a plurality of circumferential grooves each extending continuously in a tire circumferential direction and a plurality of land regions demarcated by the circumferential grooves,
each of the land regions is provided with a plurality of groove-shaped portions inclined with respect to a tire axial direction,
each of the groove-shaped portions has a first end on a first side in the tire circumferential direction and a second end on a second side opposite to the first side in the tire circumferential direction,
the groove-shaped portions are arranged over the entire circumference of the tire in the tire circumferential direction according to a predetermined arrangement rule,
in the arrangement rule, in each pair of all pairs of the groove-shaped portions adjacent to each other in the tire circumferential direction among the groove-shaped portions, the first end of one groove-shaped portion of the pair and the second end of the other groove-shaped portion of the pair are formed at the same position in the tire circumferential direction,
in each pair, the groove-shaped portions constituting the pair are formed in the same land region or in different land regions,
ground contact edges on both sides in the tire circumferential direction of at least one of the land regions have angles θa with respect to the tire axial direction in a 70% loaded state in which the tire is mounted on a standard rim, inflated to a standard inner pressure, and in contact with a flat surface with zero camber angle by being loaded with 70% of a standard tire load, and

an absolute value of a difference between one of the angles θa and an angle θb of the groove-shaped portions formed in the at least one of the land regions with respect to the tire axial direction is 5 degrees or more.

2. The tire according to claim 1, wherein the groove-shaped portions in each pair are formed in different land regions.

3. The tire according to claim 1 or 2, wherein

the land regions consist of a center land region and a pair of middle land regions, and
the absolute value is 5 degrees or more in all of the center land region and the middle land regions.

4. The tire according to any one of claims 1 to 3, wherein

the tread portion in the 70% loaded state has a ground contact surface,
the ground contact surface has a maximum ground contact length (L) in the tire circumferential direction and a ground contacting length (Lm) in the tire circumferential direction,
the ground contacting length (Lm) is a length in the tire circumferential direction of the ground contact surface in a range (W60) in the tire axial direction,
the range (W60) is a range of 60% or less of a maximum ground contacting width (W) in the tire axial direction of the ground contact surface of the tread portion in the 70% loaded state with a tire equator (C) at an axial center of the range (W60),
the maximum ground contacting width (W) is a distance in the tire axial direction between tread edges of the tread portion in the 70% loaded state, and
a ratio L/Lm between the maximum ground contact length (L) and the ground contacting length (Lm) satisfies a following expression: $1.00 \leq L/Lm < 1.10$.

5. The tire according to any one of claims 1 to 4, wherein an average angle of all of the groove-shaped portions with respect to the tire axial direction is from 10 to 50 degrees.

6. The tire according to any one of claims 1 to 5, wherein

the tread portion has a tread pattern in which one-pitch regions each forming a pattern constituent unit are arranged in the tire circumferential direction, and
in each of the land regions, a total of lengths in the tire axial direction of the groove-shaped portions formed in each of the one-pitch regions is from 60% to 120% of a width in the tire axial direction of the each of the land regions.

7. The tire according to any one of claims 1 to 6, wherein

the tread portion has a tread portion position for mounting the tire on a vehicle is specified regarding inner and outer sides of the tread portion with respect to the vehicle,
the land regions include a center land region arranged on a tire equator, and an outer middle land region arranged on the outer side with respect to the vehicle relative to the center land region, and
in each of the center land region and the outer middle land region, at least one of the groove-shaped portions has at least one of the first end (20a) and the second end (20b) terminating within the each of the center land region and the outer middle land region.

8. The tire according to claim 7, wherein

the land regions include an inner middle land region arranged on the inner side with respect to the vehicle relative to the center land region, and
at least one of the groove-shaped portions in the inner middle land region has both of the first end and the second end communicating with any one of the circumferential grooves.

9. The tire according to claim 8, wherein a sum of widths in the tire axial direction of the center land region, the inner middle land region, and the outer middle land region is from 35% to 60% of a maximum ground contacting width in the tire axial direction of a ground contact surface of the tread portion in the 70% loaded state.

10. The tire according to any one of claims 1 to 9, wherein each of the groove-shaped portions includes a sipe main body portion having a width of 2 mm or less.

11. The tire according to any one of claims 1 to 10, wherein at least one of the groove-shaped portions has a chamfered portion.

12. The tire according to any one of claims 1 to 11, wherein

the circumferential grooves include at least one center circumferential groove arranged on a tire equator side, and a groove bottom of the at least one center circumferential groove is provided with at least one protruding portion protruding outward in a tire radial direction.

13. The tire according to any one of claims 1 to 12, wherein

the tread portion has a tread portion position for mounting the tire on a vehicle is specified regarding inner and outer sides of the tread portion with respect to the vehicle,
the land regions include a center land region arranged on a tire equator, an outer middle land region arranged on the outer side with respect to the vehicle relative to the center land region, and an inner middle land region arranged on the inner side with respect to the vehicle relative to the center land region, and
a first absolute value of the inner middle land region is equal to or greater than a second absolute value of the outer middle land region,
the first absolute value is the difference between one of the angles θa of the inner middle land region and the angle θb of the groove-shaped portions formed in the inner middle land region, and
the second absolute value is the absolute value of the difference between one of the angles θa of the outer middle land region and the angle θb of the groove-shaped portions formed in the outer middle land region.

14. The tire according to claim 13, wherein a difference between the first absolute value of the inner middle land region and the second absolute value of the outer middle land region is from 3 to 25 degrees.

15. The tire according to claim 13 or 14, wherein

the first absolute value of the inner middle land region is equal to or greater than a third absolute value of the center land region, and
the third absolute value is the absolute value of the difference between one of the angles θa of the center land region and the angle θb of the groove-shaped portions formed in the center land region.

FIG.1

FIG.2

**FIG.3**

FIG.4

FIG.5

# FIG.6

Europäisches
Patentamt

European
Patent Office

Office européen
des brevets

# EUROPEAN SEARCH REPORT

**Application Number**

EP 25 20 5402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2023 146910 A (SUMITOMO RUBBER IND) 12 October 2023 (2023-10-12) * figures 1-13 * | 1-15 | INV. B60C11/03 B60C11/12 |
| A | US 2019/009616 A1 (KAWAZU AKARI [JP]) 10 January 2019 (2019-01-10) * figures 1-5 * | 1-15 | |
| A | US 2017/120684 A1 (KATAYAMA SHINSAKU [JP] ET AL) 4 May 2017 (2017-05-04) * figure 1 * | 1-15 | |
| A | EP 4 151 432 A1 (SUMITOMO RUBBER IND [JP]) 22 March 2023 (2023-03-22) * figures 1-13 * | 1-15 | |
| A | US 2016/263946 A1 (BONNAMOUR MATTHIEU [FR] ET AL) 15 September 2016 (2016-09-15) * figures 1-3 * | 1-15 | |

| | TECHNICAL FIELDS SEARCHED (IPC) |
|---|---|
| | B60C |

The present search report has been drawn up for all claims

| Place of search | Date of completion of the search | Examiner |
|---|---|---|
| Munich | 20 February 2026 | Carneiro, Joaquim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 5402

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | | | Publication date | Patent family member(s) | | | Publication date |
|---|---|---|---|---|---|---|---|
| JP 2023146910 | A | | 12-10-2023 | CN | 116890575 | A | 17-10-2023 |
| | | | | EP | 4253091 | A1 | 04-10-2023 |
| | | | | JP | 7593358 | B2 | 03-12-2024 |
| | | | | JP | 2023146910 | A | 12-10-2023 |
| | | | | JP | 2025015703 | A | 30-01-2025 |
| | | | | US | 2023311579 | A1 | 05-10-2023 |
| US 2019009616 | A1 | | 10-01-2019 | CN | 109203863 | A | 15-01-2019 |
| | | | | EP | 3424752 | A1 | 09-01-2019 |
| | | | | JP | 6904115 | B2 | 14-07-2021 |
| | | | | JP | 2019014312 | A | 31-01-2019 |
| | | | | US | 2019009616 | A1 | 10-01-2019 |
| US 2017120684 | A1 | | 04-05-2017 | CN | 106457918 | A | 22-02-2017 |
| | | | | EP | 3156259 | A1 | 19-04-2017 |
| | | | | JP | 6278843 | B2 | 14-02-2018 |
| | | | | JP | 2016000578 | A | 07-01-2016 |
| | | | | TR | 201901004 | T4 | 21-02-2019 |
| | | | | US | 2017120684 | A1 | 04-05-2017 |
| | | | | WO | 2015190273 | A1 | 17-12-2015 |
| EP 4151432 | A1 | | 22-03-2023 | CN | 115805775 | A | 17-03-2023 |
| | | | | EP | 4151432 | A1 | 22-03-2023 |
| | | | | JP | 7669886 | B2 | 30-04-2025 |
| | | | | JP | 2023042987 | A | 28-03-2023 |
| | | | | US | 2023083870 | A1 | 16-03-2023 |
| US 2016263946 | A1 | | 15-09-2016 | BR | 112016010109 | A2 | 20-03-2018 |
| | | | | CN | 105722695 | A | 29-06-2016 |
| | | | | EP | 3065956 | A1 | 14-09-2016 |
| | | | | FR | 3012768 | A1 | 08-05-2015 |
| | | | | JP | 2016540675 | A | 28-12-2016 |
| | | | | US | 2016263946 | A1 | 15-09-2016 |
| | | | | WO | 2015067644 | A1 | 14-05-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024203440 A
- JP 2023146910 A
- JP 2020196281 A
- JP 2023134124 A